# EUROPÄISCHE PATENTSCHRIFT

(11) **EP 1 095 555 B1**
(45) Veröffentlichungstag und Bekanntmachung des Hinweises auf die Patenterteilung: **22.09.2004**
(21) Anmeldenummer: 00122756.0
(22) Anmeldetag: 19.10.2000
(51) Int. Cl.: A01D 78/10

(54) **Heuwerbungsmaschine**
Haymaking machine
Machine de fenaison

(30) Priorität: 01.11.1999 DE 19952555
(43) Veröffentlichungstag der Anmeldung: 02.05.2001
(73) Patentinhaber: Maschinenfabrik Bernard Krone GmbH, 48480 Spelle (DE)
(72) Erfinder: Krone, Bernard, Dr. Ing. E.h., 48480 Spelle (DE); Horstmann, Josef, Dr.-Ing., 49479 Ibbenbüren (DE); Leifeling, Karl, Dipl.-Ing., 48477 Hörstel-Bevergern (DE); Hermes, Klaus, 48493 Wettringen (DE)

(56) Entgegenhaltungen:
- EP-A- 0 857 413
- EP-A- 0 900 515
- DE-C- 19 716 379
- DE-U- 29 521 619
- DE-U- 29 818 457

## Beschreibung

Die Erfindung bezieht sich auf eine Heuwerbungsmaschine, insbesondere zum Schwaden von landwirtschaftlichem Halm- und Blattgut, wie beispielsweise Heu, Stroh oder angewelktem Grüngut gemäß dem Oberbegriff des Anspruches 1. Eine solche Heuwerbungsmaschine umfasst vier umlaufend angetriebene Kreiselrechen oder dgl. Rechelemente und dient der Bildung eines mittig hinter den Kreiselrechen abgelegten Schwades. In der heutigen Zeit werden in der Praxis immer höhere Leistungsanforderungen gestellt, um auch weiterhin einen wirtschaftlichen Einsatz derartiger Heuwerbungsmaschinen sowie den diesen nachfolgenden Maschinen und Geräten, wie Häckslern oder dgl. zu gewährleisten. Die Vergrößerung der Arbeitsbreite einer solchen Heuwerbungsmaschine stellt eine Möglichkeit zur Bereitstellung höherer Leistungen dar, wobei eine Vergrößerung der Arbeitsbreite jedoch mit großen konstruktiven Anstrengungen verbunden ist, beispielsweise bei der Umstellung zwischen einer Arbeits- und Betriebsstellung und einer durch gesetzlich vorgeschriebene Abmessungen (maximale Transporthöhe und -breite) vorgegebene Transportstellung oder bei der Realisierung kostengünstiger und bedienerfreundlicher Antriebskonzepte.

Bei einer, aus einer eigenen älteren DE 197 16 379 C1 bekannten Heuwerbungsmaschine sind die zwei vorderen, äußeren der insgesamt vier Kreiselrechen über längenveränderliche Trag- und Antriebsanordnungen um in Fahrt- und Arbeitsrichtung gerichtete Achsen schwenkbar an einem über Laufräder gegenüber dem Erdboden abgestützten Tragrahmen schwenkbar gelagert. Die Trag- und Antriebsanordnungen der vorderen Kreiselrechen sind dabei so gestaltet bzw. am Tragrahmen angelenkt, dass zum einen durch die durch eine Schwenkbewegung erreichbare Überführung der vorderen Kreiselrechen aus der nahezu vertikalen Transportstellung in eine bodenparallele Arbeits- und Betriebsstellung und eine zeitlich überlagerte oder nachgeschaltete Verlängerung der Trag- und Antriebsanordnungen bereits eine Arbeitsbreite zur Verfügung gestellt wird, bei der aufgrund der minimalen Längen der Trag- und Antriebsanordnungen bzw. der Durchmesser der Kreiselrechen in der Transportstellung die für den Straßentransport zulässigen maximalen Höhen (Grenzwerte) erreicht sind. Ein Mangel der vorstehend beschriebenen Heuwerbungsmaschine ist darin zu sehen, dass eine weitere Vergrößerung der Arbeitsbreite nicht mehr möglich ist.

In der DE 298 18 457 U1 wird eine landwirtschaftliche Bearbeitungsmaschine offenbart, bei der über an einem Tragrahmen angelenkten Querträgem Werkzeugträger zur Bearbeitung von Erntegut und/oder Boden angebracht sind. Ein derartiger Querträger besteht dazu aus einem Innenarm und einem Außenarm, wobei Innenarm und Außenarm über ein Gelenk mit einer in Fahrt- und Arbeitsrichtung der Bearbeitungsmaschine weisenden Achse schwenkbar miteinander verbunden sind. Der Innenarm des Querträgers seinerseits ist ebenfalls schwenkbar um eine in Fahrtrichtung gerichtete Achse am Tragrahmen, angelenkt. Zur Einleitung einer Schwenkbewegung des Innenarms ist eine Hebezylindereinheit vorgesehen, während zur Einleitung einer Schwenkbewegung des Außenarms eine Schwenkzylindereinheit dient, wobei Hebezylinder- und Schwenkzylindereinheit sowohl zur Überführung der Werkzeugträger aus der Arbeits- und Betriebsstellung in die Transportstellung oder umgekehrt als auch zur Veränderung der jeweiligen Arbeitsbreite in einer vorgegebenen Reihefolge hydraulisch anzusteuern sind. Das bedeutet, dass die Bewegungen des Innenarms und des Außenarms der Querträger voneinander abhängig sind, so dass ein Nichtbeachten der Reihenfolge Bedienungsfehler zur Folge hat und somit die Bedienerfreundlichkeit beeinträchtigt ist.

Aufgabe der Erfindung ist es daher, eine Heuwerbungsmaschine, insbesondere zum Schwaden von landwirtschaftlichem Halm- oder Blattgut der vorstehend aufgeführten Art mit einer derartige Flächenleistung zu schaffen, durch die die in einer einen selbstfahrenden Mähaufbereiter und einen selbstfahrenden Feldhäcksler umfassenden Erntemaschinenkette noch bestehende Lücke geschlossen wird und somit ein optimaler Ernteverlauf ohne Wartezeiten zwischen den jeweiligen Komponenten der Erntemaschinenkette erreichbar ist. Die gute Schwerpunktslage der Heuwerbungsmaschine beim Straßentransport sowie eine bedienerfreundliche Handhabung bei der Umstellung von der Arbeits- und Betriebsstellung in die Transportstellung und umgekehrt sollen dabei erhalten bleiben.

Zur Lösung der gestellten Aufgabe zeichnet sich die Heuwerbungsmaschine der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 21 verwiesen.

Durch die Anwendung der erfindungsgemäßen Merkmale wird eine mit vier um vertikale Achsen umlaufend angetriebenen Kreiselrechen oder dgl. Rechelemente ausgerüstete Heuwerbungsmaschine, insbesondere zum Schwaden von landwirtschaftlichem Halm- oder Blattgut geschaffen, welche sich unter Beibehaltung einer guten Schwerpunktslage durch eine Arbeitsbreite und damit durch eine Flächenleistung auszeichnet, die in der heutigen Zeit von einer leistungsfähigen, beispielsweise aus einem selbstfahrenden Mähaufbereiter und einem ebenfalls selbstfahrenden Feldhäcksler gebildeten Erntemaschinenkette gefordert wird. Zur Bereitstellung solch großer Arbeitsbreiten sind nach der Erfindung Trag- und Antriebsanordnungen der vorderen Kreiselrechen jeweils an mit dem Tragrahmen verbundenen Schiebeführungen gehaltert, welche quer zur Fahrt- und Arbeitsrichtung und dabei insbesondere in horizontaler Richtung ausschiebbar ausgebildet sind. Dadurch wird es ermöglicht, zusätzlich zu bereits aus dem Stand der Technik bekannten Maßnahmen, eine Vergrößerung der Breite des von den vorderen Kreiselrechen der Heuwerbungsmaschine vorgegebenen maximal bearbeitbaren Feldstreifens zu erreichen, ohne daß dadurch eine größere und für einen Straßentransport nicht mehr zulässige Transporthöhe herbeigeführt wird. Zu den bereits bekannten Maßnahmen zählen unter anderem die Verwendung längenveränderlicher Trag- und Antriebsanordnungen oder Trag- und Antriebsanordnungen, bei denen durch eine günstige Auswahl der Schwenkachsen in Verbindung mit einer geeigneten Gestaltung eine durch eine Schwenkbewegung erreichbare Überführung der Kreiselrechen aus einer Transportstellung mit einer gesetzlich vorgegebenen Höhe in eine Arbeits- und Betriebsstellung mit einer möglichst großen Arbeitsbreite durchführbar ist. In diesem Zusammenhang sei die eigene, ältere DE 197 16 379 C1 erwähnt, in der die vorstehenden Trag- und Antriebsanordnungen näher beschrieben werden. In einer vorteilhaften Ausführungsform der Erfindung sind als Schwenkteile ausgebildete Anlenkstellen zwischen den Trag- und Antriebsanordnungen der vorderen Kreiselrechen und den mit dem Tragrahmen der Heuwerbungsmaschine verbundenen Schiebeführungen vorgesehen. Eine Schiebeführung in einer Ausbildung mit einem quer zur Fahrt- und Arbeitsrichtung ausgerichteten in Aufnahmetaschen geführten Schieberahmen zur Anlenkung der Trag- und Antriebsanordnungen der Kreiselrechen stellt eine konstruktiv einfache und kostengünstige Lösung darstellt. Die Schieberahmen weisen dazu eine U-förmig ausgebildete Grundform auf, so daß die freien Enden der die Schieberahmen bildenden und als viereckförmige Rohre ausgeführten Träger in die ebenfalls mit einer viereckförmigen Querschnittsform versehenen Aufnahmetaschen einsetzbar sind. Um ein nahezu verschleißfreies Gleiten der in den Aufnahmetaschen eingesetzten Träger der Schieberahmen zu gewährleisten, sind die Innenseiten der Aufnahmetaschen mit plattenförmigen, vorzugsweise aus einem widerstandsfähigen Kunststoff bestehenden Führungsleisten besetzt, die sich über die gesamte Länge der Aufnahmetaschen erstrecken.

Um sowohl in der Arbeits- und Betriebsstellung als auch in der Transportstellung eine gute Schwerpunktslage der Heuwerbungsmaschine zu erreichen, ist die Anbringungshöhe der Schiebeführungen am Tragrahmen der Heuwerbungsmaschine bzw. der in Fahrt- und Arbeitsrichtung ausgerichteten Schwenkachsen der Anlenkstellen an den Schiebeführungen so gewählt, daß unterhalb der Schiebeführungen nur eine beim Einsatz der Heuwerbungsmaschine auf dem Feld erforderliche Mindestbodenfreiheit verbleibt. Diese Mindestbodenfreiheit ist dazu so bemessen, daß unterhalb der Schiebeführungen lediglich soviel Freiraum vorhanden ist, daß breitgestreutes Halm- und Blattgut sich nicht an den Schieberahmen aufhängt und dann von diesen mitgeschleift wird. Zur Überwindung größerer Bodenunebenheiten oder von bereits fertiggestellten Erntegutschwaden auf dem Vorgewende ist nach der Erfindung eine Achse vorgesehen, mit der der Tragrahmen der Heuwerbungsmaschine aus einer eine Arbeits- und Betriebsstellung und eine große Standfestigkeit mit minimaler Bodenfreiheit zulassenden Grundstellung in eine eine größere Bodenfreiheit aufweisende Stellung anhebbar ausgebildet ist. Somit kann die Heuwerbungsmaschine in vorteilhafter Weise in konkreten Einzelsituationen auf eine größere Bodenfreiheit angehoben werden, während die Heuwerbungsmaschine im Normalfall mit geringstmöglicher Bodenfreiheit und größstmöglicher Standfestigkeit betrieben werden kann. Gemäß einer Weiterbildung der Erfindung handelt es sich bei der zur Abstützung der Heuwerbungsmaschine gegenüber dem Erdboden verwendeten Achse um eine je Maschinenseite mit zwei hintereinander angeordneten Laufrädern bestückten Tandemachse, welche über schwenkbar am Tragrahmen gelagerte Tragarme mit diesem verbunden ist. Der Einsatz einer Tandemachse bringt zum einen ein besseres Fahrverhalten auf der Straße und zum anderen eine Reduzierung der Stützkräfte der Laufräder auf dem Erdboden. Zur Veränderung der Bodenfreiheit der Heuwerbungsmaschine sind vorzugsweise hydraulische Kolben-Zylinder-Anordnungen vorgesehen, welche sich zwischen den Tragarmen der Tandemachse und dem Tragrahmen erstrecken. Ein weiterer vorteilhafter Aspekt der Erfindung ist in der Anordnung der Laufräder der Tandemachse zu sehen. Dabei weisen die hinteren Laufräder der Tandemachse eine verminderte Spurbreite auf, so daß dadurch der erforderliche Freiraum für die Tandemachse zwischen den vorderen und hinteren Kreiselrechen der Heuwerbungsmaschine möglichst gering gehalten werden kann, d.h. durch die verminderte Spurbreite der hinteren Laufräder der Tandemachse kann, in Fahrt- und Arbeitsrichtung gesehen der Abstand zwischen den vorderen und den hinteren Kreiselrechen und damit die Gesamtabmessungen (Länge) der Heuwerbungsmaschine klein gehalten werden.

Ein kostengünstiges und sich durch eine einfache Handhabung bei der Überführung der Kreiselrechen der Heuwerbungsmaschine aus einer Arbeits- und Betriebsstellung in eine Transportstellung und umgekehrt auszeichnendes Antriebskonzept ergibt sich durch die Anbringung einer zentralen Antriebseinheit, welche für jeden Kreiselrechen einen Abtrieb aufweist und auf dem Tragrahmen so angeordnet ist, daß eine für einen störungfreien Antrieb erforderliche räumliche Zuordnung zu den Eingangsgetrieben der Trag- und Antriebsanordnungen der Kreiselrechen sowohl in der Arbeits- und Betriebsstellung als auch in der Transportstellung gegeben ist. Das bedeutet, daß die Anordnung der zentalen Antriebseinheit so gewählt ist, daß die Eingangsgetriebe der Trag- und Antriebsanordnungen der Kreiselrechen über Gelenkwellen von der zentralen Antriebseinheit mit Antriebsenergie versorgt werden können, wobei die Beugungswinkel der Kreuzgelenke der Gelenkwellen sowohl in Arbeits- und Betriebsstellung als auch in der Transportstellung möglich klein gehalten werden können. In einer vorteilhaften Ausführungsform sieht die Erfindung einen sich quer zur Fahrt- und Arbeitsrichtung erstreckenden Getriebeholm vor, auf dem nebeneinander Getriebeeinheiten angebracht sind, die auf einem baugleichen Getriebegehäuse basieren und jeweils über Gelenkwellen antriebsmäßig mit einander verbunden sind.

Zur Verstellung der Breite des von den vorderen Kreiselrechen der Heuwerbungsmaschine vorgegebenen Feldstreifens d.h. zur Verschiebung der Schieberahmen in den Aufnahmetaschen der Schiebeführungen bzw. zur Arretierung der Schieberahmen der Schiebeführungen in einer gewählten Position (Arbeitsbreite) sind als hydraulische Kolben-Zylinder-Anordnungen ausgeführte, eine Zug- und Druckkraft erzeugende Stellglieder vorgesehen, wobei zur zuverlässigen Festlegung bzw. Beibehaltung einer gewählten Arbeitsbreite den hydraulischen Kolben-Zylinder-Anordnungen beispielsweise Sperrventile vorgeschaltet sein können. Um eine saubere und zuverlässige Übergabe des von den vorderen Kreiselrechen zusammengeführten Erntegutes an die hinteren Kreiselrechen gewährleisten zu können, ist eine Überdeckung der Einzelarbeitsbreiten der vorderen und hinteren Kreiselrechen erforderlich. Aus diesem Grund kann es zweckmäßig sein, daß bei Veränderungen der Arbeitsbreite der gesamten Heuwerbungsmaschine gleichzeitig eine Verschiebung in den Schiebeführungen (seitlich gerichtete Änderung der Arbeitsposition der vorderen Kreiselrechen) und eine beispielsweise durch eine Veränderung der Länge der Trag- und Antriebsanordnungen erreichbare Veränderung der Arbeitsposition der hinteren Kreiselrechen durchführbar ist.

Eine detaillierte Beschreibung des Gegenstandes der Erfindung erfolgt nun anhand eines Ausführungsbeispieles. In der Zeichnung stellt im einzelnen dar:
- Fig.1: eine Draufsicht einer erfindungsgemäßen Heuwerbungsmaschine in einer Arbeits- und Betriebsstellung;
- Fig.2: eine Schnittdarstellung der Heuwerbungsmaschine gemäß Schnitt II-II in Fig.1, wobei ein Kreiselrechen sich in der Transportstellung und ein Kreiselrechen sich in der Arbeits- und Betriebsstellung befindet;
- Fig.3: eine vergrößerte, teilweise abgebrochene Darstellung der Einzelheit X in Fig.2;
- Fig.4: eine Schnittdarstellung der Heuwerbungsmaschine gemäß Schnitt IV-IV in Fig.1 mit in Transportstellung überführten Kreiselrechen;
- Fig.5: eine vergrößerte, teilweise abgebrochene Darstellung der Einzelheit Y in Fig.1;

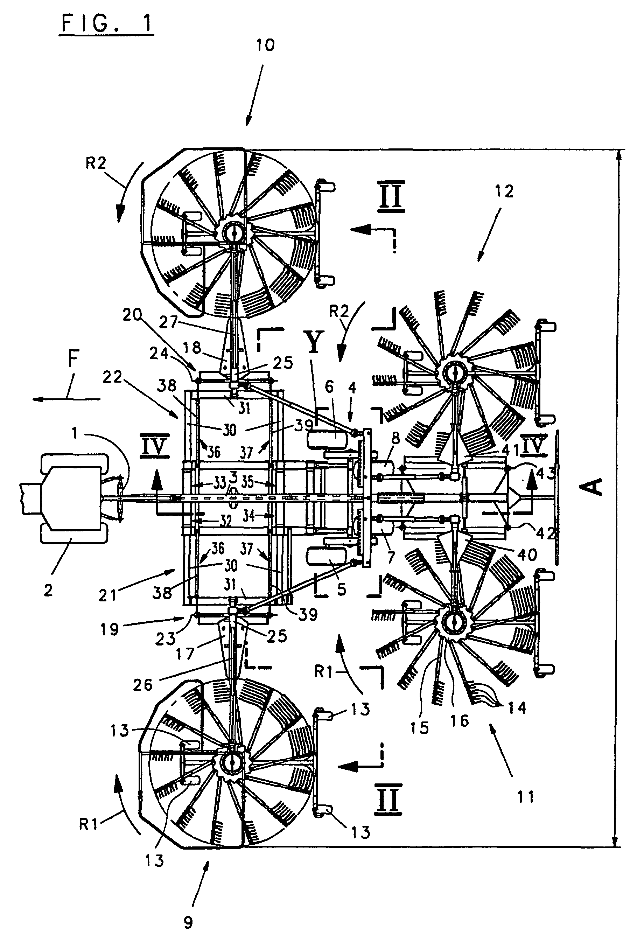

Aus der Fig. 1 ist der Grundaufbau einer erfindungsgemäßen Heuwerbungsmaschine ersichtlich, die über einen Anbaubock 1 an einem landwirtschaftlichen Zugfahrzeug 2 angekuppelt ist. An den Anbaubock 1 schließt sich ein Tragrahmen 3 an, der um eine vertikale Achse schwenkbar mit dem Anbaubock 1 verbunden ist. Etwa im mittleren Bereich des Tragrahmens 3 befindet sich zur Abstützung des Tragrahmens 3 gegenüber dem Erdboden ein Fahrwerk 4, das mit Laufrädern 5,6,7,8 bestückt ist. Desweiteren umfaßt die Heuwerbungsmaschine vordere Kreiselrechen 9,10 und hintere Kreiselrechen 11,12, die dem Tragrahmen 3 in einer V-förmigen Anordnung zugeordnet sind und sich über sich selbsttätig der Fahrt- und Arbeitsrichtung F der Heuwerbungsmaschine anpassenden Stützrädern 13 gegenüber dem Erdboden abstützen. Die Kreiselrechen 9,10,11,12 ihrerseits weisen mit Zinken 14 bestückte Zinkenarme 15 auf, die innerhalb eines Kreiselgehäuses 16 gelagert sind und von einer nicht näher dargestellten Steuerkurve innerhalb des Kreiselgehäuses 16 steuerbar sind. Grundsätzlich können alle Kreiselrechen 9,10,11,12 so ausgeführt sein, daß die von den äußeren Zinken 14 der Zinkenarme 15 beschriebenen Durchmesser gleich groß ausgebildet sind oder jeweils nur die vorderen Kreiselrechen 9,10 und die hinteren Kreiselrechen 11,12 gleiche Durchmesser aufweisen. Beim dargestellten Ausführungsbeispiel sind die Kreiselrechen 9,10,11,12 mit Zinkenarmen 15 versehen, deren Zinken 14 im Einsatz gleich große Durchmesser beschreiben. Mit einer Heuwerbungsmaschine gemäß dem dargestellten Ausführungsbeispiel kann eine durchgehende Fläche mit einer Gesamtarbeitsbreite A bearbeitet werden, wobei die Gesamtarbeitsbreite A in einem Bereich von 12 bis 15 m oder noch darüber liegen kann.Die Drehrichtung der Kreiselrechen 9,10,11,12 entspricht dabei den jeweiligen Drehrichtungspfeilen R1 und R2, so daß mittig hinter den hinteren inneren Kreiselrechen 11,12 ein Schwad abgelegt werden kann, das für einen Einsatz nachfolgender Großmaschinen wie beispielweise Feldhäckseler oder dgl. die richtige Größe aufweist.

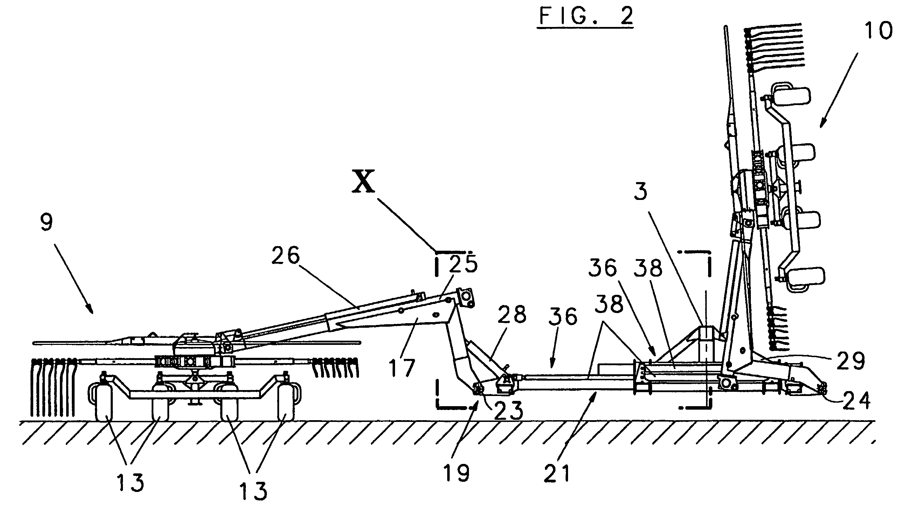

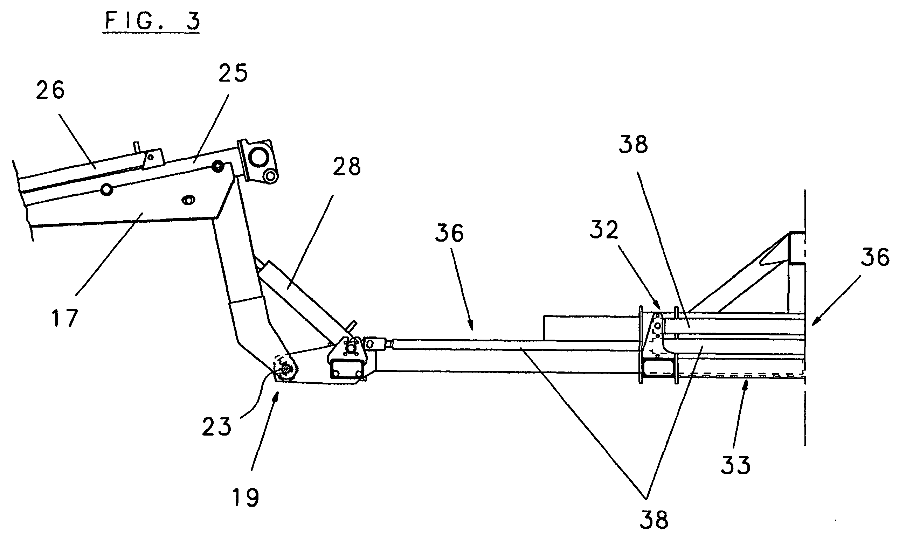

Wie weiterhin aus der Fig.1 zu ersehen ist, sind die vorderen Kreiselrechen 9,10 über Trag- und Antriebsanordnungen 17,18 an Anlenkstellen 19,20 zweier quer zur Fahrt- und Arbeitsrichtung F verschiebbar am Tragrahmen 3 der Heuwerbungsmaschine gehalterter Schieberahmen 21,22 um in Fahrt- und Arbeitsrichtung F gerichtete Schwenkachsen 23,24 gelagert und können somit durch eine Schwenkbewegung um die Schwenkachsen 23,24 aus einer bodenparallelen Arbeits- und Betriebsstellung in eine zumindest annähernd vertikale Transportstellung und zurück überführt werden. Die Trag- und Antriebsanordnungen 17,18 sind dabei, wie dies insbesondere aus Fig.2 und Fig.3 ersichtlich ist, als Winkelhebel ausgebildet, wobei die langen Schenkel 25 der Trag- und Antriebsanordnungen 17,18 in ihrer Länge veränderlich ausgebildet sind. Zur Veränderung der Länge der langen Schenkel 25 sind hydraulische Kolben-Zylinder-Anordnungen 26,27 vorgesehen, wobei diese gleichzeitig oder zeitlich versetzt mit hydraulischen Kolben-Zylinder-Anordnungen 28,29 zur Überführung der Kreiselrechen 9,10 aus der Arbeits- und Betriebsstellung in eine Transportstellung und zurück von einer hydraulischen Antriebsquelle mit Druckmittel beaufschlagt werden können.Abweichend und/oder ergänzend zu den vorstehenden Ausführungen können die Trag- und Antriebsanordnungen 17,18 so ausgebildet sein, wie es in der DE 197 16 379 C1 offenbart ist.

In einer vorteilhaften Ausführungsform sind die Schieberahmen 21,22 aus viereckförmigen (rechteckförmigen) Trägern 30,31 zu einer U-förmig ausgebildeten Grundform zusammengesetzt, wobei die Träger 30 in Aufnahmetaschen 32,33,34,35 quer zur Fahrt- und Arbeitsrichtung F verschiebbar geführt sind. Zusammen ergeben Schieberahmen 21,22 und die Aufnahmetaschen 32,33,34,35 Schiebeführungen 21,22,32,33,34,35. Wie insbeondere aus Fig.2 und 3 hervorgeht, sind die Aufnahmetaschen 32,33 und 34,35 übereinander angebracht, so daß dadurch eine längere und damit bessere Führung der Träger 30 in den Aufnahmetaschen 32,33,34,35 erreichbar ist. In einer Weiterbildung ist es aber auch vorstellbar, die Aufnahmetaschen 32,33 und 34,35 nebeneinander anzuordnen, so daß dann die Schieberahmen 21,22 baugleich gestaltet werden können. Um ein nahezu verschleißfreies Gleiten der in den Aufnahmetaschen 32,33,34,35 eingesetzten Träger 30 der Schieberahmen 21,22 zu gewährleisten, sind die Innenseiten der Aufnahmetaschen 32,33,34,35 mit plattenförmigen, vorzugsweise aus einem widerstandsfähigen Kunststoff gefertigten Führungsleisten bestückt, die sich über die gesamte Länge der Aufnahmetaschen 32,33,34,35 erstrecken. In einer weiteren Ausführungsform können die Führungsleisten geteilt sein, wobei ein erster Abschnitt an den äußeren Enden der Aufnahmetaschen 32,33,34,35 und ein zweiter Abschnitt an den Trägern 30 der Schieberahmen 21,22 angebracht sind. Zur Verschiebung der Schieberahmen 21,22 in den Aufnahmetaschen 32,33,34,35 bzw. zur Arretierung der Schieberahmen 21,22 in eine ausgewählten Arbeitsbreite sind nach der Erfindung den Schiebeführungen 21,22,32,33,34,35 Zug- und Druckkraft erzeugende Stellglieder 36,37 zugeordnet, wobei diese vorzugsweise als hydraulische Kolben-Zylinder-Anordnungen 38,39 ausgeführt sind.

Wie weiterhin aus der Fig.1 zu entnehmen ist, umfaßt der hintere Teil der Heuwerbungsmaschine weitere Kreiselrechen 11,12, welche ebenfalls über Trag- und Antriebsanordnungen 40,41 um in Fahrt- und Arbeitsrichtung F gerichtete Schenkachsen 42,43 schwenkbar am Tragrahmen 3 gelagert sind und somit durch eine Schwenkbewegung aus der bodenparallelen Arbeits- und Betriebsstellung in eine in etwa vertikale Transportstellung und zurück überführt werden können. Zur Anpassung an die Arbeitsbreiteneinstellung der vorderen Kreiselrechen 9,10 an die Breiteneinstellung der hinteren Kreiselrechen 11,12 sind die Trag- und Antriebsanordnungen 40,41 ebenfalls längenveränderlich ausgebildet.

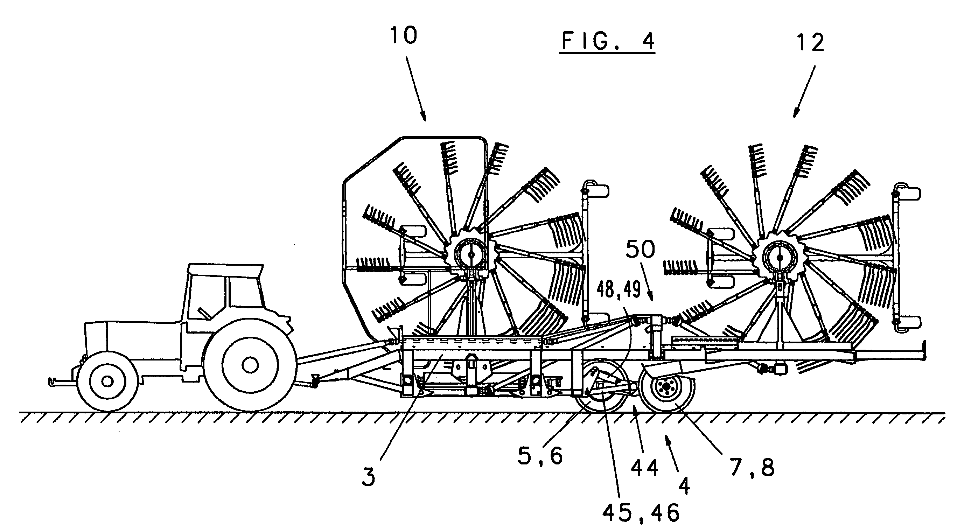

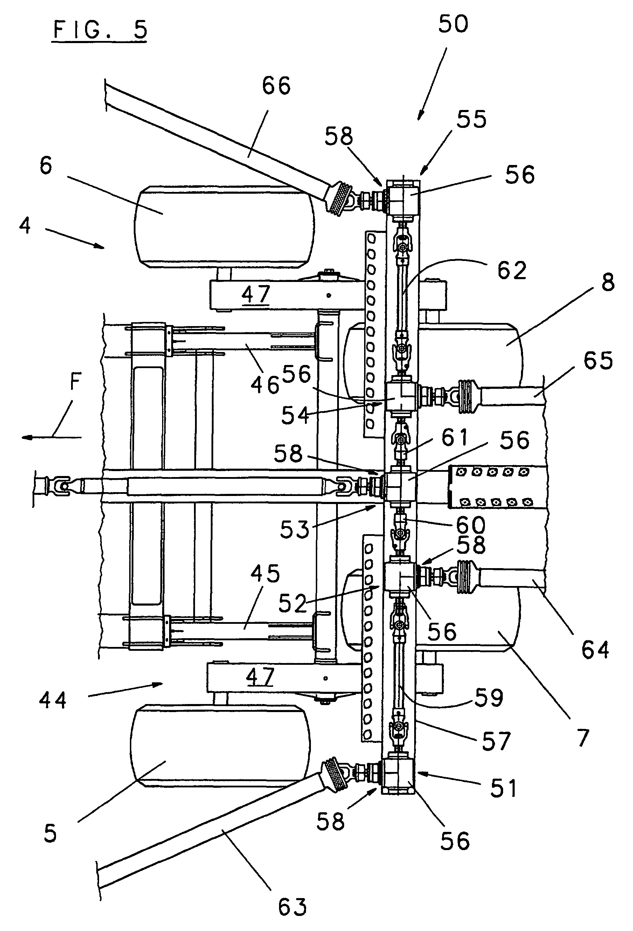

Wie aus den Fig. 4 und 5 hervorgeht, ist die Heuwerbungsmaschine durch eine vier Laufräder 5,6,7,8 umfaßende Tandemachse 44 gegenüber dem Erdboden abgestützt, wobei die Tandemachse 44 über Tragarme 45,46 am Tragrahmen 3 schwenkbar gehaltert ist und die Laufräder 5,6,7,8 an um eine horizontal und quer zur Fahrt- und Arbeitsrichtung F gerichtete Achse schwenkbar gelagerten Achsschwingen 47 angelenkt sind. Dadurch kann der Tragrahmen 3 der Heuwerbungsmaschine aus einer eine Arbeits- und Betriebsstellung und eine große Standfestigkeit mit minimaler Bodenfreiheit zulassenden Grundstellung in eine eine größere Bodenfreiheit aufweisende Stellung angehoben und damit in vorteilhafter Weise in konkreten Einzelsituationen mit einer größeren Bodenfreiheit betrieben werden, während die Heuwerbungsmaschine im Normalfall in einer Stellung mit geringstmöglicher Bodenfreiheit und größstmöglicher Standfestigkeit verbleibt. Eine Veränderung der Bodenfreiheit der Heuwerbungsmaschine kann über sich zwischen dem Tragrahmen 3 und den Tragarmen 45,46 erstreckenden hydraulische Kolben-Zylinder-Anordnungen 48,49 erfolgen. Eine weitere vorteilhafte Weiterbildung der Erfindung sieht vor, daß die hinteren Laufräder 7,8 der Tandemachse 44 eine gegenüber den vorderen Laufrädern 5,6 verminderte Spurbreite aufweisen, wodurch der Freiraum zwischen den vorderen Kreiselrechen 9,10 und den hinteren Kreiselrechen 11,12 auf ein Minimum beschränkt und damit die Baulänge der Heuwerbungsmaschine klein gehalten werden kann.

Wie insbesondere aus den Fig. 1 und 5 zu entnehmen ist, weist die Heuwerbungsmaschine ein Antriebskonzept auf, bei dem eine in etwa mittig zwischen den vorderen Kreiselrechen 9,10 und den hinteren Kreiselrechen 11,12 auf dem Tragrahmen 3 angeordnete zentrale Antriebseinheit 50 mit einem Abtrieb für jeden Kreiselrechen 9,10,11,12 vorgesehen ist. Die zentrale Antriebseinheit 50 umfaßt dazu Getriebeeinheiten 51,52,53,54,55, welche sich durch eine Modulbauweise auszeichnen. Als Basis dient dabei für alle Getriebeeinheiten 51,52,53,54,55 ein baugleiches Getriebegehäuse 56, welches auf einem mit dem Tragrahmen 3 verbundenen Getriebeholm 57 gehaltert ist. Desweiteren kann für den Getriebeeingangsbereich der Getriebeeinheit 53 sowie für den Getriebeausgangsbereich der Getriebeeinheiten 51,52,54,55 eine baugleiche beispielsweise aus einer Kegelradwelle, einem Getriebedeckel und Lagern bestehenden Montageeinheit 58 eingesetzt werden. Zur antriebsmäßigen Verbindung der Getriebeeinheiten 51,52,53,54,55 sind Gelenkwellen 59,60,61,62 vorgesehen, welche in einer weiteren denkbaren Ausführungsform auch durch eine Durchgangswelle ersetzt werden könnten. Zur Antriebsübertragung von den Getriebeeinheiten 51,52,54,55 zu den Kreiselrechen 9,10,11,12 sind weitere Gelenkwellen 63,64,65,66 eingesetzt, deren Kreuzgelenke sowohl in der Arbeits- und Betriebsstellung der Kreiselrechen 9,10,11,12 als auch in der Transportstellung bedingt durch eine günstige Anordnung der zentralen Antriebseinheit 50 mit minimalen Beugungswinkeln betrieben werden können. Zum Antrieb der zentralen Antriebseinheit 50 und damit der Kreiselrechen 9,10,11,12 dient ein Antriebsverbindung 67, welche sich zwischen dem landwirtschaftlichen Zugfahrzeug 2 und der zentralen Antriebseinheit 50 erstreckt.

## Patentansprüche

1. Heuwerbungsmaschine, insbesondere zum Schwaden von landwirtschaftlichem Halmund Blattgut, mit vier, um vertikale Achsen umlaufend angetriebenen, sich über Stützräder (13) gegenüber dem Erdboden abstützenden und mit Zinken (14) bestückte Zinkenarme (15) aufweisenden Kreiselrechen (9,10,11,12) oder dgl. Rechelemente, von denen mindestens die in Fahrtrichtung (F) vorne liegenden Kreiselrechen (9,10) quer zur Fahrtrichtung in horizontaler Richtung bewegbar sind, und die Kreiselrechen (9, 10, 11, 12) über beidseitig an einem mit Laufrädern versehenen Tragrahmen (3) um in Fahrtrichtung (F) gerichtete Schwenkachsen (23,24,42,43) gelagerte Trag- und Antriebsanordnungen (17,18,40,41) aus einer in etwa horizontalen Arbeits- und Betriebsstellung in eine zumindest annähernd vertikale Transportstellung und zurück füberführbar sind, wobei die Trag- und Antriebsanordnungen (17,18,40,41) in der Arbeits- und Betriebsstellung eine vom Tragrahmen (3) nach außen gerichtete und in der Transportstellung eine vom Tragrahmen (3) nach oben weisende Stellung einnehmen, **dadurch gekennzeichnet, dass** die Schwenkachsen (23,24) aufweisenden Anlenkstellen (19,20) der Trag- und Antriebsanordnungen (17,18) der vorderen Kreiselrechen (9,10) jeweils an, mit dem Tragrahmen (3) verbundenen Schiebeführungen (21,22,32,33,34,35) gehaltert sind und die Trag- und Antriebsanordnungen (17,18) zusammen mit den vorderen Kreiselrechen (9,10) mittels der Schiebeführungen (21,22,32,33,34,35) eine Bewegung quer zur Fahrtrichtung (F) ausführen können, die im wesentlichen in horizontaler Richtung und nach außen und zurück gerichtet ist.

2. Heuwerbungsmaschine nach Anspruch 1, **dadurch gekennzeichnet, dass** die Schiebeführungen (21,22,32,33,34,35) zur Halterung der Trag- und Antriebsanordnungen (17,18) aus Schieberahmen (21,22) und quer zur Fahrtrichtung (F) ausgerichtete und am Tragrahmen (3) gehalterte Aufnahmetaschen (32,33,34,35) bestehen.

3. Heuwerbungsmaschine nach Anspruch 2, **dadurch gekennzeichnet, dass** die Schwenkachsen (23,24) aufweisenden Anlenkstellen (19,20) der Trag- und Antriebsanordnungen (17,18) an den Schieberahmen (21,22) gehaltert werden.

4. Heuwerbungsmaschine nach einem der Ansprüche 2 oder 3, **dadurch gekennzeichnet, dass** die Schieberahmen (21,22) der Schiebeführungen (21,22,32,33,34,35) in den quer zur Fahrtrichtung (F) ausgerichteten und am Tragrahmen (3) gehalterten Aufnahrnetaschen (32,33,34,35) beweg- und arretierbar geführt sind.

5. Heuwerbungsmaschine nach einem der Ansprüche 1 bis 4, **dadurch gekennzeichnet, dass** durch die Verschiebung der Schieberahmen (21,22) in den Aufnahmetaschen (32,33,34,35) eine stufenlose Vergrößerung bzw. Verkleinerung der Gesamtarbeitsbreite der Heuwerbungsmaschine erreichbar ist.

6. Heuwerbungsmaschine nach einem der Ansprüche 2 bis 5, **dadurch gekennzeichnet, dass** die Schiebeführungen (21,22,32,33,34,35) derart am Tragrahmen (3) gehaltert sind, dass zwischen den Schieberahmen (21,22) und dem Erdboden nur eine beim Einsatz erforderliche Mindestbodenfreiheit verbleibt.

7. Heuwerbungsmaschine nach einem der Ansprüche 2 bis 6, **dadurch gekennzeichnet, dass** die Schieberahmen (21,22) aus Trägern (30,31) bestehen, welche zu einer U-förmig ausgebildeten Grundform zusammengesetzt sind.

8. Heuwerbungsmaschine nach Anspruch 7, **dadurch gekennzeichnet, dass** die Träger (30,31) der Schieberahmen (21,22) die Querschnittsform eines viereckförmigen Rohres aufweisen.

9. Heuwerbungsmaschine nach Anspruch 7, **dadurch gekennzeichnet, dass** die Aufnahmetaschen (32,33,34,35) ebenfalls eine viereckförmige Querschnittsform haben.

10. Heuwerbungsmaschine nach einem der Ansprüche 2 bis 9, **dadurch gekennzeichnet, dass** die Aufnahmetaschen (32,34) für den Schieberahmen (21) über oder unter den Aufnahmetaschen (33,35) für den Schiebenrahmen (22) angeordnet sind.

11. Heuwerbungsmaschine nach einem der Ansprüche 2 bis 9, **dadurch gekennzeichnet, dass** die Aufnahmetaschen (32,34) für den Schieberahmen (21) und die Aufnahmetaschen (33,35) für den Schieberahmen (22) nebeneinander angebracht sind.

12. Heuwerbungsmaschine nach einem der Ansprüche 2 bis 11, **dadurch gekennzeichnet, dass** zur Bewegung bzw. zur Arretierung der Schieberahmen (21,22) in den Aufnahmetaschen (32,33,34,35) Zug- und Druckkraft erzeugende Stellglieder (36,37) vorgesehen sind.

13. Heuwerbungsmaschine nach Anspruch 12, **dadurch gekennzeichnet, dass** die Zug- und Druckkraft erzeugenden Stellglieder (36,37) als hydraulische Kolben-Zylinder-Anordnungen (38,39) ausgebildet sind.

14. Heuwerbungsmaschine nach einem der Ansprüche 1 bis 13, **dadurch gekennzeichnet, dass** auf dem Tragrahmen (3) eine zentrale Antriebseinheit (50) angeordnet ist, welche für jeden Kreiselrechen (9,10,11,12) einen Abtrieb aufweist.

15. Heuwerbungsmaschine nach einem der Ansprüche 1 bis 14, **dadurch gekennzeichnet, dass** die zentrale Antriebseinheit (50) aus Getriebeeinheiten (51,52,53,54,55) gebildet ist, die auf einem quer zur Fahrt- und Arbeitsrichtung (F) sich erstreckenden Getriebeholm (57) angeordnet sind.

16. Heuwerbungsmaschine nach einem der Ansprüche 1 bis 15, **dadurch gekennzeichnet, dass** der Getriebeholm (57) der zentralen Antriebseinheit (50) in Fahrt- und Arbeitsrichtung (F) gesehen zwischen den vorderen Kreiselrechen (9,10) und den hinteren Kreiselrechen (11,12) am Tragrahmen angebracht ist.

17. Heuwerbungsmaschine nach einem der Ansprüche 1 bis 16, **dadurch gekennzeichnet, dass** die Getriebeeinheiten (51,52,53,54,55) der zentralen Antriebseinheit (50) ein baugleiches Getriebegehäuse (56) aufweisen.

18. Heuwerbungsmaschine nach einem der Ansprüche 1 bis 17, **dadurch gekennzeichnet, dass** zur Abstützung des Tragrahmens (3) gegenüber dem Erdboden eine Tandemachse (44) mit Laufrädern (5,6,7,8) vorgesehen ist.

19. Heuwerbungsmaschine nach einem der Ansprüche 1 bis 18, **dadurch gekennzeichnet, dass** zur Abstützung des Tragrahmens (3) gegenüber dem Erdboden eine Tandemachse (44) mit Laufrädern (5,6,7,8) vorgesehen ist, mit der der Tragrahmen (3) aus einer eine Arbeits- und Betriebsstellung zulassende und eine große Standfestigkeit durch minimale Bodenfreiheit gewährleistende Grundstellung in eine, eine größere Bodenfreiheit aufweisende Stellung anhebbar ist.

20. Heuwerbungsmaschine nach einem der Ansprüche 1 bis 19, **dadurch gekennzeichnet, dass** zur höhenveränderlichen Anbringung der Tandemachse (44) mit den Laufrädern (5,6,7,8) am Tragrahmen (3) schwenkbar gelagerte Tragarme (45,46) vorgesehen sind, welche durch hydraulische Kolben-Zylinder-Anordnungen (48,49) betätigt werden können.

21. Heuwerbungsmaschine nach einem der Ansprüche 1 bis 20, **dadurch gekennzeichnet, dass** die hinteren Laufräder (7,8) der Tandemachse (44) gegenüber den vorderen Laufrädem (5,6) eine verminderte Spurbreite aufweisen.

## Claims

1. Haymaking machine, particularly for windrowing agricultural stalk and leafed crops, having four rotary rakes (9, 10, 11, 12) or similar rake members which are driven in rotation about vertical axes, which are supported in relation to the ground by support wheels (13) and have tine arms (15) fitted with tines (14), of which at least those rotary rakes which are situated at the front in the direction of travel (F) can be moved in a horizontal direction transversely to the direction of travel (F), and the rotary rakes (9, 10, 11, 12) can be transferred from an approximately horizontal working and operating position to an at least approximately vertical transport position, and back, by means of carrier and drive arrangements (17, 18,40,41), which carrier and drive arrangements (17, 18,40,41) are mounted, on both sides of a carrier frame (3) provided with ground wheels, to be movable about pivot shafts (23, 24, 42, 43) directed in the direction of travel (F), the carrier and drive arrangements (17, 18, 40, 41) occupying a position in which they are directed outwards from the carrier frame (3) in the working and operating position and a position in which they point upwards from the carrier frame (3) in the transport position, **characterised in that** the hinge points (19, 20) of the carrier and drive arrangements (17, 18) for the front rotary rakes (9,10), which hinge points (19, 20) have pivot shafts (23, 24), are each mounted on mountings for sliding movement (21, 22, 32, 33, 34, 35) which are connected to the carrier frame (3), and, by means of the mountings for sliding movement (21, 22, 32, 33,34, 35), the carrier and drive arrangements (17, 18) are able to perform, together with the front rotary rakes (9, 10), a movement transversely to the direction of travel (F) which is directed substantially in a horizontal direction and outwards and back.

2. Haymaking machine according to claim 1, **characterised in that** the mountings for sliding movement (21, 22, 32, 33, 34, 35) for mounting the carrier and drive arrangements (17, 18) comprise sliding frames (21, 22) and holding receptacles (32, 33, 34, 35), which latter are mounted on the carrier frame and aligned transversely to the direction of travel (F).

3. Haymaking machine according to claim 2, **characterised in that** the hinge points (19, 20) of the carrier and drive arrangements (17, 18), which hinge points (19, 20) have the pivot shafts (23, 24), are mounted on the sliding frames (21, 22).

4. Haymaking machine according to either of daims 2 and 3, **characterised in that** the sliding frames (21, 22) of the mountings for sliding movement (21, 22, 32, 33, 34, 35) are guided to be movable and lockable in the holding receptacles (32, 33, 34, 35) which are mounted on the carrier frame (3) and aligned transversely to the direction of travel (F).

5. Haymaking machine according to one of daims 1 to 4, **characterised in that,** by means of the displacement of the sliding frames (21, 22) in the holding receptacles (32, 33, 24, 35), a stepless enlargement or reduction of the overall working width of the haymaking machine can be obtained.

6. Haymaking machine according to one of daims 2 to 5, **characterised in that** the mountings for sliding movement (21, 22, 32, 33, 34, 35) are mounted on the carrier frame (3) in such a way that only a minimum ground clearance required for operation is left between the sliding frames (21, 22) and the ground.

7. Haymaking machine according to one of daims 2 to 6, **characterised in that** the sliding frames (21, 22) comprise girders (30, 31) which are assembled into a basic shape of U-shaped configuration.

8. Haymaking machine according to claim 7, **characterised in that** the cross-sectional shape of the girders (30, 31) of the sliding frames (21, 22) is that of a quadrilateral tube.

9. Haymaking machine according to claim 7, **characterised in that** the cross-sectional shape of the holding receptacles (32, 33, 24, 25) is also that of a quadrilateral.

10. Haymaking machine according to one of daims 2 to 9, **characterised in that** the holding receptacles (32, 34) for the sliding frame (21) are arranged above or below the holding receptacles (33, 35) for the sliding frame (22).

11. Haymaking machine according to one of claims 2 to 9, **characterised in that** the holding receptacles (32, 34) for the sliding frame (21) and the holding receptacles (33, 35) for the sliding frame (22) are mounted next to one another.

12. Haymaking machine according to one of daims 2 to 11, **characterised in that** actuators (36, 37) generating tractive and compressive forces are provided to move and lock the sliding frames (21, 22) in the holding receptacles (32, 33, 34, 35)

13. Haymaking machine according to claim 12, **characterised in that** the actuators (36, 37) generating tractive and compressive forces are in the form of hydraulic piston-and-cylinder arrangements (38, 39).

14. Haymaking machine according to one of daims 1 to 13, **characterised in that** a central drive unit (50), which has a drive output for each rotary rake (9, 10, 11, 12), is arranged on the carrier frame (3).

15. Haymaking machine according to one of daims 1 to 14, **characterised in that** the central drive unit (50) is formed from gearbox units (51, 52, 53, 54, 55) which are arranged on a gearbox beam (57) extending transversely to the direction of travel and operation (F).

16. Haymaking machine according to one of claims 1 to 15, **characterised in that,** looking in the direction of travel and operation (F), the gearbox beam (57) is mounted on the carrier frame between the front rotary rakes (9, 10) and the rear rotary rakes (11,12).

17. Haymaking machine according to one of claims 1 to 16, **characterised in that** the gearbox units (51, 52, 53, 54, 55) of the central drive unit (50) have housings (56) of the same design.

18. Haymaking machine according to one of daims 1 to 17, **characterised in that** a tandem axle (44) having ground wheels (5, 6, 7, 8) is provided to support the carrier frame (3) in relation to the ground.

19. Haymaking machine according to one of daims 1 to 18, **characterised in that** a tandem axle (44) having ground wheels (5, 6, 7, 8) is provided to support the carrier frame (3) in relation to the ground, by which tandem axle (44) the carrier frame (3) can be raised from a basic position which permits a working and operating position and ensures high stability by virtue of minimal ground clearance, to a position in which there is greater ground clearance.

20. Haymaking machine according to one of daims 1 to 19, **characterised in that** pivotably mounted carrier arms (45, 46), which can be operated by hydraulic piston-and-cylinder arrangements (48, 49), are provided on the carrier frame (3) to allow the tandem axle (44) and the ground wheels (5, 6, 7, 8) to be attached in such a way that height can be varied

21. Haymaking machine according to one of daims 1 to 20, **characterised in that** the rear ground wheels (7, 8) of the tandem axle (44) are of reduced track in comparison with the front ground wheels (5, 6).

## Revendications

1. Machine de fenaison, en particulier pour l'andainage des tiges et des feuilles dans l'agriculture, comportant quatre roues racleuses (9, 10, 11,12) ou éléments racleurs similaires entraînés en rotation autour d'axes verticaux, s'appuyant au moyen de roues d'appui (13) par rapport au sol et présentant des bras dentés (15) munis de dents (14), dont au moins les roues racleuses (9, 10) disposées en avant dans la direction de marche (F) sont mobiles dans la direction horizontale, perpendiculairement à la direction de marche, et les roues racleuses (9, 10, 11,12) sont translatables à partir d'une position approximativement horizontale de travail et de fonctionnement dans une position de transport au moins approximativement verticale et vice-versa au moyen de dispositifs de support et d'entraînement (17, 18, 40, 41) logés des deux côtés sur un châssis porteur (3) muni de roues de roulement, autour d'axes de pivotement (23, 24, 42, 43) orientés dans la direction de marche (F), et les dispositifs de support et d'entraînement (17, 18,40,41) prennent, dans la position de travail et de fonctionnement, une position orientée vers l'extérieur à partir du châssis porteur (3) et, dans la position de transport, une position orientée vers le haut à partir du châssis porteur (3),
**caractérisée en ce que**
les emplacements d'articulation (19, 20), présentant des axes de pivotement (23, 24), des dispositifs de support et d'entraînement (17, 18) des roues racleuses avant (9, 10) sont maintenus respectivement sur des guidages de coulissement (21, 22, 32, 33, 34, 35) reliés avec le châssis porteur (3) et les dispositifs de support et d'entraînement (17, 18) peuvent exécuter, avec les roues racleuses avant (9, 10), au moyen de guidages de coulissement (21, 22, 32, 33, 34, 35), un déplacement perpendiculaire à la direction de marche (F), et orienté pour l'essentiel dans la direction horizontale et vers le haut, et vice-versa.

2. Machine de fenaison selon la revendication 1,
**caractérisée en ce que**
les guidages de coulissement (21, 22, 32, 33, 34, 35) pour le maintien des dispositifs de support et d'entraînement (17, 18) sont composés de châssis coulissants (21, 22) et de poches de réception (32, 33, 34, 35) orientées perpendiculairement à la direction de marche (F) et maintenues sur le châssis porteur (3).

3. Machine de fenaison selon la revendication 2,
**caractérisée en ce que**
les emplacements d'articulation (19, 20), présentant des axes de pivotement (23, 24), des dispositifs de support et d'entraînement (17, 18) sont maintenus sur les châssis coulissants (21, 22).

4. Machine de fenaison selon l'une des revendications 2 ou 3,
**caractérisée en ce que**
les châssis coulissants (21, 22) des guidages de coulissement (21, 22, 32, 33, 34, 35) sont guidés, de façon à être mobiles et arrêtés, dans les poches de réception (32, 33, 34, 35) orientées perpendiculairement à la direction de marche (F) et maintenues sur le châssis porteur (3).

5. Machine de fenaison selon l'une des revendications 1 à 4,
**caractérisée en ce que**
la translation des châssis coulissants (21, 22) dans les poches de réception (32, 33, 34, 35), permet un agrandissement ou un rétrécissement en continu de la largeur totale de travail de la machine de fenaison.

6. Machine de fenaison selon l'une des revendications 2 à 5,
**caractérisée en ce que**
les guidages de coulissement (21, 22, 32, 33, 34, 35) sont maintenus sur le châssis porteur (3) de manière, qu'entre les châssis coulissants (21, 22) et le sol, il reste seulement une garde au sol minimale nécessaire pendant le service.

7. Machine de fenaison selon l'une des revendications 2 à 6,
**caractérisée en ce que**
les châssis coulissants (21, 22) sont constitués de supports (30, 31) composés pour avoir une forme de base en U.

8. Machine de fenaison selon la revendication 7,
**caractérisée en ce que**
les supports (30, 31) des châssis coulissants (21, 22) ont une section de tube de forme carrée.

9. Machine de fenaison selon la revendication 7,
**caractérisée en ce que**
les poches de réception (32, 33, 34, 35) ont également une section de forme carrée.

10. Machine de fenaison selon l'une des revendications 2 à 9,
**caractérisée en ce que**
les poches de réception (32, 34) pour le châssis coulissant (21) sont disposées au-dessus ou en dessous des poches de réception (33, 35) pour l'autre châssis coulissant (22).

11. Machine de fenaison selon l'une des revendications 2 à 9,
**caractérisée en ce que**
les poches de réception (32, 34) pour le châssis coulissant (21) et les poches de réception (33, 35) pour l'autre châssis coulissant (22) sont montées l'une près de l'autre.

12. Machine de fenaison selon l'une des revendications 2 à 11,
**caractérisée en ce que**
des éléments de réglage (36, 37) produisent une force de traction et de pression pour le déplacement et pour le blocage des châssis coulissants (21,22) dans les poches de réception (32, 33, 34, 35).

13. Machine de fenaison selon la revendication 12,
**caractérisée en ce que**
les éléments de réglage (36, 37) produisant une force de traction et de pression sont des dispositifs hydrauliques à pistons-vérins (38, 39).

14. Machine de fenaison selon l'une des revendications 1 à 13,
**caractérisée en ce qu'**
une unité centrale d'entraînement (50), qui présente un entraînement pour chaque roue racleuse (9, 10, 11, 12), est disposée sur le châssis porteur (3).

15. Machine de fenaison selon l'une des revendications 1 à 14,
**caractérisée en ce que**
l'unité centrale d'entraînement (50) est formée d'unités de transmission (51, 52, 53, 54, 55) disposées sur un longeron de transmission (57) s'étendant perpendiculairement à la direction de marche et de travail (F).

16. Machine de fenaison selon l'une des revendications 1 à 15,
**caractérisée en ce que**
le longeron de transmission (57) de l'unité centrale d'entraînement (50) est monté, vu dans la direction de marche et de travail (F), entre les roues racleuses avant (9, 10) et les roues racleuses arrière (11, 12).

17. Machine de fenaison selon l'une des revendications 1 à 16,
**caractérisée en ce que**
les unités de transmission (51, 52, 53, 54, 55) de l'unité centrale d'entraînement (50) présentent un carter de transmission (56) de même type.

18. Machine de fenaison selon l'une des revendications 1 à 17,
**caractérisée en ce qu'**
il est prévu, pour l'appui du châssis porteur (3) par rapport au sol, un axe en tandem (44) avec roues de roulement (5, 6, 7, 8).

19. Machine de fenaison selon l'une des revendications 1 à 18,
**caractérisée en ce que**
pour l'appui du châssis porteur (3) par rapport au sol, un axe en tandem (44) avec roues de roulement (5, 6, 7, 8), permet de lever le châssis porteur (3), à partir d'une position de base permettant une position de travail et de fonctionnement et garantissant une grande stabilité statique grâce à une garde au sol minimale, à une position présentant une plus grande garde au sol.

20. Machine de fenaison selon l'une des revendications 1 à 19,
**caractérisée en ce que**
pour mettre en place avec variation en hauteur l'axe en tandem (44) avec les roues de roulement (5, 6, 7, 8), des bras de support (45, 46) logés de manière pivotante sur le châssis porteur (3), peuvent être actionnés par des dispositifs hydrauliques à pistons-vérins (48, 49).

21. °) Machine de fenaison selon l'une des revendications 1 à 20,
**caractérisée en ce que**
les roues de roulement arrière (7, 8) de l'axe en tandem (44) présentent un écartement de voie réduit par rapport aux roues de roulement avant (5, 6).
